(19) **Europäisches Patentamt**

**European Patent Office**

**Office européen des brevets**

(11) **EP 0 948 852 B1**

(12) **FASCICULE DE BREVET EUROPEEN**

(45) Date de publication et mention
de la délivrance du brevet:
**11.08.2004   Bulletin 2004/33**

(51) Int Cl.⁷: **H04L 9/32**

(21) Numéro de dépôt: **97953002.9**

(22) Date de dépôt: **23.12.1997**

(86) Numéro de dépôt international:
**PCT/FR1997/002409**

(87) Numéro de publication internationale:
**WO 1998/028878 (02.07.1998 Gazette 1998/26)**

(54) **PROCEDE D'AUTHENTIFICATION AUPRES D'UN SYSTEME DE CONTROLE D'ACCES ET/OU DE PAIEMENT**

AUTHENTIFIZIERUNGSVERFAHREN FÜR ZUGANGSKONTROLLSYSTEM UND/ODER FÜR ZAHLUNGSSYSTEM

AUTHENTICATING METHOD FOR AN ACCESS AND/OR PAYMENT CONTROL SYSTEM

(84) Etats contractants désignés:
**DE FR GB IT**

(30) Priorité: **24.12.1996  FR 9615942**

(43) Date de publication de la demande:
**13.10.1999   Bulletin 1999/41**

(73) Titulaire: **FRANCE TELECOM**
**75015 Paris (FR)**

(72) Inventeurs:
- **CAMPANA, Mireille**
  **F-92140 Clamart (FR)**
- **ARDITTI, David**
  **F-92140 Clamart (FR)**
- **GILBERT, Henri**
  **F-91440 Bures-sur-Yvette (FR)**
- **LECLERCQ, Thierry**
  **F-75013 Paris (FR)**
- **BONTRON, Nicolas**
  **F-75003 Paris (FR)**

(74) Mandataire: **Audier, Philippe André et al**
**Brevalex,**
**3, rue du Docteur Lancereaux**
**75008 Paris (FR)**

(56) Documents cités:
EP-A- 0 414 314          EP-A- 0 613 073
WO-A-96/13920          FR-A- 2 745 965
GB-A- 2 294 795

- JANSON P ET AL: "Security in open networks and distributed systems" COMPUTER NETWORKS AND ISDN SYSTEMS, 21 OCT. 1991, NETHERLANDS, vol. 22, no. 5, ISSN 0169-7552, pages 323-346, XP000228961

## Description

Domaine technique

La présente invention concerne un procédé d'authentification auprès d'un système de contrôle d'accès et/ou paiement .de services vocaux ou télématiques offerts par un fournisseur de service, qui peut être ou non un opérateur de télécommunications.

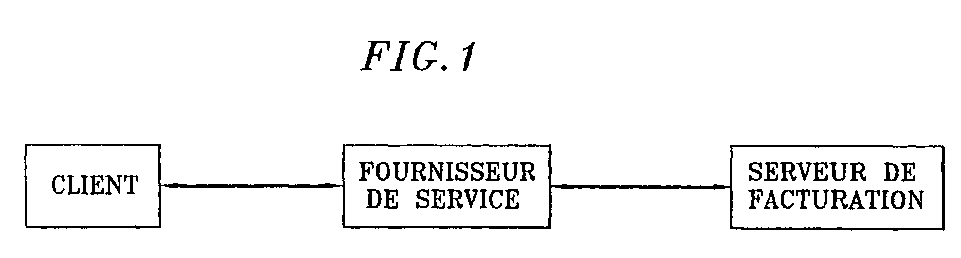

La configuration de référence, illustrée sur la figure, montre un dispositif classique relatif :

1°) aux équipements d'un client (terminal téléphonique ou télématique) ;

2°) aux équipements d'un fournisseur de service (par exemple : point de commande de services du réseau d'un opérateur, serveur vocal, serveur Internet appartenant à un fournisseur de services, etc.) ;

3°) à un serveur de contrôle d'accès et/ou de paiement.

Cette configuration de référence s'applique aux échanges considérés dans la suite de la description. Les fonctions 2°) et 3°) peuvent relever ou non du même opérateur/fournisseur de service.

Dans un tel dispositif, le déroulement d'une transaction donnant lieu à contrôle d'accès et/ou paiement est le suivant :

(I) Etablissement d'une communication entre le client et le fournisseur de service.

(II) Vérification par le fournisseur de service auprès du serveur de contrôle d'accès et/ou de paiement des droits d'accès du client et/ou de l'existence d'un compte solvable (compte client à facturer ou compte prépayé) ; obtention éventuelle de données complémentaires telles que le crédit maximum pour le compte du considéré.

(III) Fourniture de la prestation.

(IV) Envoi éventuel de données de taxation, du fournisseur de service vers le serveur de contrôle d'accès et/ou de paiement.

Dans une telle transaction les besoins de sécurité identifiés sont les suivants :

• Anonymat du client vis-à-vis du tiers

Par tiers, on entend ici :

1°) toute personne susceptible d'avoir accès aux échanges entre client et fournisseur de service. Il ne doit pas être possible d'utiliser les données d'identification et d'authentification transmises lors de ces échanges pour retrouver l'identité du client, ou même déceler quelles communications sont relatives à un même client.

2°) Le fournisseur de service lui-même, dans le cas où celui-ci n'assure pas la fonction de contrôle d'accès et/ou de facturation. Dans le cas où ces fonctions sont séparées, on peut ne pas souhaiter que le fournisseur de service puisse établir l'identité des clients, ni même établir des statistiques basées sur le regroupement des transactions relatives à un même client. L'identité du client (ou du compte utilisé), indispensable pour le contrôle d'accès et/ou de paiement du service, ne doit donc alors être communiquée au fournisseur de service, ni en clair ni sous forme d'un pseudonyme statique.

• Authentification de l'identité du client lors de la phase (II)

Cette authentification permet de s'assurer que le client, dont le numéro de client ou le numéro de compte est indiqué dans les données d'identification qui parviennent (via le fournisseur de service) au système de contrôle, a bien établi une communication avec le fournisseur de service. Une authentification active est indispensable afin de prévenir des fraudes par rejeu de données anciennes.

En outre, un service de sécurité additionnel peut être offert optionnellement :

• Authentification de données du client

Cette fonction peut permettre, par exemple au serveur de contrôle d'accès et/ou de paiement, de s'assurer de l'acceptation par un client du montant d'une prestation dans le cas où les données, sur lesquelles portent le calcul d'authentification, représentent ce montant.

Etat de la technique antérieure

A l'heure actuelle, la plupart des dispositifs à clé secrète assurant une authentification utilisent un schéma du type « identification-authentification » (typiquement nom + mot de passe) et n'assurent en conséquence aucun anonymat.

Les dispositifs garantissant l'anonymat en même temps que l'accès légal à une ressource sont rares et systématiquement basés sur l'utilisation d'une clé publique, comme décrit dans l'article référencé [1] en fin de description, mais cela implique des échanges assez lourds (au moins 512 bits). Or, le client peut ne disposer que d'un téléphone et aboutir, chez le fournisseur de service, sur un opérateur humain, ou un serveur, vocal ou non. Le client peut aussi disposer d'un micro-ordinateur sans modem. Il n'est alors pas possible de lui demander de taper sur son clavier, ou d'énoncer oralement, une trop longue séquence de caractères.

Dans le procédé de l'invention, du fait des fortes contraintes sur la longueur du message d'identification-authentification, le recours à une méthode d'authentification à clé publique (qui conduirait à des messages de plus de 100 digits) n'est pas envisageable. De plus, on ne peut pas recourir à la technique classique d'authentification d'un nombre aléatoire émis par le réseau, qui nécessite un échange bidirectionnel.

L'invention a pour objet un procédé d'authentification qui permette de résoudre les problèmes énoncés ci-dessus.

Le document référencé (2) décrit une méthode et un dispositif permettant une identification d'un utilisateur de mobile dans un réseau de communication. Cette méthode consiste à crypter l'identificateur de l'utilisateur et/ou son mot de passe, et une indication de synchronisation, de préférence sur un intervalle de temps fixé, en utilisant une fonction à sens unique secrète et à envoyer le message crypté appelé « Identificateur d'utilisateur dynamique » à un centre utilisateur où celui-ci est enregistré. Cette méthode assure l'anonymat de l'utilisateur vis-à-vis des tiers : les tiers sont, en effet, incapables d'identifier l'utilisateur ou de suivre ses déplacements. Cette méthode permet à un utilisateur qui passe d'une zone domicile à une autre zone de prévenir le centre utilisateur de cette zone et le centre de sa zone domicile.

Le document référencé [3] décrit divers mécanismes de protection d'informations, d'objets et autres ressources trouvés dans des réseaux et dans des systèmes distribués. Ce document décrit notamment des méthodes d'authentification à sens unique. Dans une des ces méthodes, une carte électronique donnée à un utilisateur génère périodiquement un nouveau nombre aléatoire en cryptant une lecture horloge temps réel avec une clé secrète cachée à l'intérieur de la carte. Le nombre aléatoire résultant est alors utilisé comme mot de passe à « une utilisation ». Un ordinateur central, qui a une copie de la clé secrète de chaque carte utilisateur, peut réaliser le même cryptage pour vérifier les numéros aléatoires qu'il reçoit. Ces cartes peuvent envoyer à l'ordinateur central un mot dit « challenge » tel que (nom de l'utilisateur, mot de passe, date, heure) crypté avec une clé secrète construite, partagée avec l'ordinateur.

Exposé de l'invention

La présente invention concerne un procédé d'authentification auprès d'un système de contrôle d'accès et/ou de paiement assurant l'anonymat vis-à-vis d'un tiers, caractérisé en ce qu'on émet, selon un protocole d'authentification monodirectionnel, une séquence d'authentification qui varie entièrement à chaque transaction et ne permet pas à un tiers de déterminer l'identité du client, ni même de déterminer quelles transactions sont issues d'un même client.

Avantageusement on utilise un compteur incrémenté de une unité dans l'authentifieur du client à chaque tentative d'authentification, les données d'authentification transmises lors de chaque accès étant la valeur courante C du compteur du client et un code d'authentification CA de d digits, calculé à partir de la clé secrète d'authentification du client, $K_{client}$, et du compteur C, à l'aide d'un algorithme d'authentification A, le code CA étant donné par la relation :

$$CA = A(K_{client}, C)$$

Dans le cas où le client souhaite « signer » des données M, on fait également intervenir le paramètre M dans le calcul d'authentification, le code d'authentification CA étant donné par la relation :

$$CA = A(K_{client}, C||M).$$

Dans le serveur de contrôle d'accès et/ou de paiement, la valeur de compteur correspondant à la dernière authentification réussie, C', est conservée pour chaque client.

Le serveur de contrôle d'accès et/ou de paiement est capable de reconstituer la clé secrète d'authentification $K_{client}$ de chaque client.

Avantageusement, cette clé peut être reconstituée à partir d'une clé maîtresse d'authentification KA commune à tout le système et de l'identité du client, à l'aide d'un algorithme dit de diversification et noté D, avec :

$$K_{client} = D(KA, ID[client]).$$

Avantageusement une tentative d'authentification n'est acceptée que si pour le client considéré la valeur de compteur C est supérieure à C' de une à quelques dizaines d'unités et si la valeur d'authentification CA qui l'accompagne est égale à la valeur d'authentification recalculée par le serveur à partir de C et de la clé $K_{client}$.

Avantageusement afin d'assurer l'anonymat de l'identité du client vis-à-vis du fournisseur de service, on chiffre cette identité à l'aide d'une clé partagée entre l'authentifieur du client et le serveur de contrôle d'accès et/ou paiement.

On peut optionnellement répartir les clients en groupes et utiliser une clé de chiffrement distincte pour chaque groupe.

Dans une première variante de l'invention, non basée sur l'utilisation de numéros de groupe, le client transmet, lors de chaque accès :

- son numéro d'identification individuel NI chiffré avec la clé K de chiffrement du système en utilisant la valeur d'authentification CA comme vecteur d'initialisation ;
- les données d'authentification CA et une représentation abrégée de la valeur du compteur C (qui peut par exemple être constituée des deux digits de poids faible de C) notée c. Avantageusement, c peut être chiffré à l'aide de la clé K, en utilisant la valeur d'authentification CA comme vecteur d'initialisation.

Dans une seconde variante, basée sur l'utilisation de numéros de groupe, le client transmet, lors de chaque accès :

- le numéro du groupe auquel il appartient, NG, en clair ;
- son numéro d'identification individuel à l'intérieur du groupe, NI, chiffré avec la clé $K_{NG}$ de chiffrement du groupe NG en utilisant la valeur d'authentification CA comme vecteur d'initialisation. L'identité complète d'un client est donnée par le couple (NG, NI) ;
- les données d'authentification CA et une représentation abrégée de la valeur du compteur C (qui peut par exemple être constituée des deux digits de poids faible de C) notée c. Avantageusement, c peut être chiffré à l'aide de la clé $K_{NG}$, en utilisant la valeur de CA comme vecteur d'initialisation.

Dans une troisième variante, on chiffre en outre le numéro de groupe NG à l'aide d'une clé de chiffrement K commune à tout le système.

Pour faciliter la gestion des clés de groupe dans le serveur de contrôle d'accès et/ou paiement, toutes les clés de groupe $K_{NG}$ peuvent dépendre d'une même clé maîtresse KE, à travers un algorithme de diversification :

$$K_{NG} = D (KE, NG)$$

L'algorithme de chiffrement de NI et de C à l'aide de la clé $K_{NG}$ étant noté E, l'algorithme de chiffrement de NG à l'aide de la clé K étant noté E', la concaténation de deux chaînes décimales (ou binaires ou hexadécimales, etc..) A et B étant notée A||B, le message d'identification-authentification est constitué de la concaténation des éléments suivants :

- le chiffré $E'_{K,CA}$ (NG) du numéro de groupe ;
- le code d'authentification CA ;
- le chiffré $E_{KNG,CA}(c||NI)$, où c est une représentation abrégée de la valeur du compteur C (c est par exemple constitué des deux digits de poids faible du compteur C) ;

la séquence d'identification-authentification est donnée par la chaîne :

$$E'_{K,CA} (NG)||E_{KNG,CA}(C||NI)||CA.$$

Brève description des dessins

La figure illustre un dispositif classique relatif à des équipements d'un client, d'un fournisseur de service et d'un serveur de contrôle d'accès et/ou de paiement.

Exposé détaillé de modes de réalisation

Dans le dispositif illustré sur la figure, pour que les échanges clients-réseaux véhiculant les données d'identification et d'authentification, réalisés lors de la phase (I) définie précédemment soient réalisables depuis tous types de terminaux, et en particulier depuis un combiné téléphonique, le système de contrôle d'accès et/ou paiement est tel que :

- sur le tronçon client-fournisseur l'échange d'identification-authentification est monodirectionnel et se résume à l'envoi d'un message unique émis par le client ;
- le message d'identification-authentification est avantageusement codé en décimal (afin de pouvoir être, par exemple, transmis en DTMF (multiplication de fréquence à partir de deux sons) ou dicté en vocal depuis un combiné téléphonique), sa longueur n'excédant pas une quinzaine de chiffres, pour des raisons d'ergonomie.

Les calculs cryptographiques d'authentification et de chiffrement sont effectués dans des dispositifs sécurisés offrant une protection suffisante des clés utilisées. Pour le serveur de contrôle d'accès et/ou paiement, on a avantageusement recours à un module de sécurité physiquement protégé. Trois options d'implantation du dispositif de sécurité d'un client, appelé ici authentifieur, sont possibles :

- distribution au client d'un authentifieur personnel, assez semblable à une calculette de poche, le fonctionnement de l'authentifieur étant conditionné par le contrôle, en local, d'un code personnel ;
- logiciel implanté sur un micro-ordinateur, les clés étant alors stockées chiffrées en-dehors du logiciel ;
- serveur télématique, fournissant à un client ses séquences d'authentification.

Selon le procédé de l'invention, afin de faire varier la séquence d'authentification envoyée par le client (ou son authentifieur), on applique un algorithme d'authentification à un nombre, dont le serveur de contrôle d'accès et/ou paiement vérifie simplement qu'il varie à chaque transaction.

On peut utiliser un compteur incrémenté de une unité dans l'authentifieur du client, à chaque tentative d'authentification. Les données d'authentification transmises, lors de chaque accès, sont la valeur courante C du compteur du client et un code d'authentification CA de d digits, calculé à partir de la clé secrète d'authentification du client, $K_{client}$, et du compteur C, à l'aide d'un algorithme d'authentification A.

Dans le cas où le client ne souhaite pas seulement établir son identité auprès du serveur de contrôle d'accès et/ou paiement, mais également « signer » des données M, on fait également intervenir le paramètre M dans le calcul d'authentification.

On a ainsi :

- dans le cas d'une pure authentification, le code CA donné par la relation :

$$CA = A(K_{client}, C) ;$$

- dans le cas où le client doit également authentifier des données, le code d'authentification CA donné par la relation :

$$CA = A(K_{client}, C\|M).$$

Si l'algorithme d'authentification A est bien conçu, un fraudeur ayant observé les échanges d'un client ne sait pas prédire le code d'authentification correspondant à une nouvelle valeur de C (ou à un nouveau couple (C,M)) avec une probabilité supérieure à $10^{-d}$.

Dans le serveur de contrôle d'accès et/ou de paiement, la valeur de compteur correspondant à la dernière authentification réussie, C', est conservée pour chaque client. Par ailleurs, si la méthode de diversification mentionnée plus haut est mise en oeuvre, le serveur de contrôle d'accès et/ou de paiement est capable de reconstituer la clé secrète d'authentification $K_{client}$ de chaque client, à partir d'une clé maîtresse d'authentification KA commune à tout le système et de l'identité du client, à l'aide d'un algorithme dit de « diversification », noté D :

$$K_{client} = D(KA, ID[client]).$$

Une tentative d'authentification n'est acceptée que si pour le client considéré la valeur de compteur C est supérieure à C' de une à quelques dizaines d'unités et si la valeur d'authentification CA qui l'accompagne est égale à la valeur d'authentification recalculée par le serveur à partir de C et de la clé $K_{client}$.

Dans le cas d'un authentifieur multi-utilisateur, il peut être difficile de garantir que les utilisateurs emploient leurs tickets de connexion dans l'ordre exact où ceux-ci ont été délivrés. On peut alors aménager une procédure de vérification des données d'authentification pour que de légers déséquencements de la valeur de C soient admissibles.

Afin d'assurer l'anonymat de l'identité du client vis-à-vis du fournisseur de service, on chiffre cette identité à l'aide d'une clé partagée entre l'authentifieur du client et le serveur de contrôle d'accès et/ou paiement (chiffrement à clé secrète).

Cette clé ne peut pas être propre à chaque client : le serveur de contrôle d'accès et/ou paiement aurait besoin, pour la retrouver et la déchiffrer, de recevoir l'identité ou un pseudonyme du client en clair, ce que l'on cherche précisément à éviter. Mais à l'inverse, l'utilisation d'une clé de chiffrement unique pour tout le système, implantée dans les modules de sécurité de tous les utilisateurs, serait peu sûre.

On peut alors répartir les clients en groupes et utiliser une clé de chiffrement distincte pour chaque groupe. La taille d'un groupe doit être suffisamment grande pour que la connaissance du groupe, auquel appartient un client, ne constitue qu'un faible indice pour l'identifier, et le nombre de groupes doit être suffisant pour que la compromission de la clé de chiffrement commune au groupe ait des conséquences limitées (perte d'anonymat pour un groupe).

Dans une première variante de l'invention, non basée sur l'utilisation de numéros de groupe, le client transmet, lors de chaque accès :

- son numéro d'identification individuel NI chiffré avec la clé K de chiffrement du système en utilisant la valeur d'authentification CA comme vecteur d'initialisation ;
- les données d'authentification CA et une représentation abrégée de la valeur du compteur C (qui peut par exemple être constituée des deux digits de poids faible de C) notée c. Avantageusement, c peut être chiffré à l'aide de la clé K, en utilisant la valeur d'authentification CA comme vecteur d'initialisation.

Dans une seconde variante, basée sur l'utilisation de numéros de groupe, le client transmet, lors de chaque accès :

- le numéro du groupe auquel il appartient (NG) en clair ;
- son numéro d'identification individuel à l'intérieur du groupe (NI, trois digits) chiffré avec la clé $K_{NG}$ de chiffrement du groupe NG en utilisant la valeur d'authentification CA comme vecteur d'initialisation. L'identité complète d'un client est donnée par le couple (NG, NI) ;
- les données d'authentification (CA et C) : on choisit ici de ne pas chiffrer CA ; par contre, C est chiffré à l'aide de la clé $K_{NG}$.

On peut légèrement perfectionner la solution ci-dessus en chiffrant en outre le numéro de groupe NG à l'aide d'une clé de chiffrement K commune à tout le système, au lieu de la transmettre en clair. On obtient ainsi une troisième variante.

Pour faciliter la gestion des clés de groupe dans le serveur de contrôle d'accès et/ou paiement, on peut faire dépendre toute les clés de groupe $K_{NG}$ d'une même clé maîtresse KE, à travers un algorithme de diversification :

$$K_{NG} = D\ (KE,\ NG).$$

L'algorithme de chiffrement de NI et de C à l'aide de la clé $K_{NG}$ est noté E, et l'algorithme de chiffrement de NG à l'aide de la clé K est noté E'.

La concaténation de deux chaînes décimales (ou binaires, ou hexadécimales) A et B étant notée A||B, le message d'identification-authentification est constitué de la concaténation des éléments suivants :

- le chiffre $E'_{K,CA}$ (NG) du numéro de groupe (longueur variable, supérieure ou égale à 1) ;
- le code d'authentification CA, en clair ;
- le chiffré $E_{KNG,CA}(c||NI)$, où c est une représentation abrégée de la valeur du compteur C (c est par exemple constitué des deux digits de poids faible du compteur C).

La séquence d'identification-authentification est ainsi donnée par une chaîne :

$$E'_{K,CA}(NG)||E_{KNG,CA}(C||NI)||CA.$$

REFERENCES

[1] Article de D. Chaum intitulé « Untraceable Electronic Cash, Advances In Cryptology » (Crypto 88, Springer Verlag 1990, pages 319-327)
[2] WO-A-96 13920
[3] « Security in Open Networks and Distributed Systems » de JANSON P et al. (Computer networks and ISDN Systems, 21 octobre 1991, Pays-Bas, vol. 22, N° 5, ISSN 0169-7552, pages 323-346, XP000228961)

**Revendications**

1. Procédé d'authentification auprès d'un système de contrôle d'accès et/ou paiement de services vocaux ou télématiques offerts à un client par un fournisseur de service, permettant d'assurer l'anonymat du client vis-à-vis des tiers, **caractérisé en ce que**, lors de chaque accès, le client émet, selon un protocole d'authentification monodirectionnel, une séquence d'authentification qui varie entièrement à chaque transaction, formée à partir d'un compteur C variant à chaque transaction et du numéro d'identification individuel du client NI, à l'aide de deux fonctions cryptographiques, par :

- calcul d'un code d'authentification CA faisant intervenir des éléments comprenant la clé secrète $K_{client}$ d'authentification du client et la valeur courante du compteur C ;
- calcul de chiffrement faisant intervenir des éléments comprenant une clé de chiffrement K partagée entre les authentifieurs des clients et le système de contrôle d'accès et/ou de paiement, le numéro d'identification individuel du client NI et le code d'authentification CA.

2. Procédé selon la revendication 1, dans lequel la séquence d'authentification comprend une représentation abrégée c de la valeur C du compteur du client.

3. Procédé selon la revendication 2, dans lequel la représentation abrégée de la valeur C du compteur du client est chiffrée à l'aide de la clé de chiffrement K.

4. Procédé selon la revendication 1, dans lequel l'authentifieur du client comprend un compteur incrémenté de une unité à chaque tentative d'authentification.

5. Procédé selon la revendication 1, dans lequel le code d'authentification CA est donné par la relation : $CA = A(K_{client},\ C||M)$ dans le cas où le client souhaite signer des données M.

6. Procédé selon la revendication 1, dans lequel, dans le système de contrôle d'accès et/ou de paiement, une valeur de compteur C', correspondant à la dernière authentification réussie, est conservée pour chaque client, et en ce que ledit système reconstitue la clé secrète d'authentification $K_{client}$ de chaque client à partir d'une clé maîtresse d'authentification KA commune et de l'identité du client, à l'aide d'un algorithme noté D, avec : $K_{client} = D(KA,\ ID[client])$.

7. Procédé selon la revendication 6, dans lequel une tentative d'authentification n'est acceptée que si, pour un client considéré, la valeur de compteur C est supérieure à C' d'au moins une unité et si la valeur d'authentification CA, qui l'accompagne, est égale à la valeur d'authentification recalculée par le système à partir de la valeur du compteur C et de la clé d'authentification du client $K_{client}$.

8. Procédé selon la revendication 1, dans lequel les clients étant répartis en groupes, on utilise une clé de chiffrement distincte pour chaque groupe.

9. Procédé selon la revendication 8, dans lequel le client transmet, lors de chaque accès :

- le numéro NG du groupe auquel il appartient, en clair ;

- son numéro d'identification individuel NI à l'intérieur du groupe, chiffré avec la clé de chiffrement $K_{NG}$ du groupe NG ;
- les données d'authentification CA et une valeur abrégée c du compteur C.

10. Procédé selon la revendication 9, dans lequel la valeur abrégée c est chiffrée à l'aide de la clé de chiffrement du groupe $K_{NG}$.

11. Procédé selon la revendication 9, dans lequel on chiffre le numéro de groupe NG à l'aide d'une clé de chiffrement K commune.

12. Procédé selon la revendication 11, dans lequel toutes les clés de groupe $K_{NG}$ dépendent d'une même clé maîtresse KE, à travers un algorithme D tel que : $K_{NG} = D(KE, NG)$.

13. Procédé selon la revendication 9, dans lequel l'algorithme de chiffrement du numéro d'identification individuel NI et de la représentation abrégé c de la valeur du compteur à l'aide de la clé $K_{NG}$ étant noté E, l'algorithme de chiffrement du numéro de groupe NG à l'aide de la clé K étant noté E', la concaténation de deux chaînes A et B étant notée A||B, la séquence d'identification-authentification est donnée par la chaîne :

$$E'_{K,CA}(NG)||E_{KNG,CA}(C||NI)||CA.$$

**Patentansprüche**

1. Authentifizierungsverfahren bei einem Zugangs- und/oder Zahlungssteuersystem von vokalen oder telematischen Diensten, die einem Kunden von einem Dienstleister geboten werden, wobei die Anonymität des Kunden gegenüber Dritten gewährleistet ist, **dadurch gekennzeichnet, dass** bei jedem Zugriff der Kunde gemäß einem eindirektionalen Authentifizierungsprotokoll eine Authentifizierungssequenz sendet, die sich bei jeder Transaktion vollkommen ändert, und die anhand eines sich bei jeder Transaktion ändernden Zählers C und der individuellen Identifizierungsnummer des Kunden NI mit Hilfe zweier kryptographischer Funktionen gebildet wird, und zwar durch:

- Berechnung eines Authentifizierungscodes CA, an dem Elemente beteiligt sind, welche den Geheimcode $K_{client}$ der Authentifizierung des Kunden und den aktuellen Wert des Zählers C umfassen,
- Berechnung der Chiffrierung, an der Elemente beteiligt sind, welche einen Chiffriercode K, den sich die Authentifizierer der Kunden und das Zugangs- und/oder Zahlungs-Steuersystem teilen, die individuelle Identifizierungsnummer des Kunden NI und den Authentifizierungscode CA umfassen.

2. Verfahren nach Anspruch 1, wobei die Authentifizierungssequenz eine abgekürzte Darstellung c des Werts C des Zählers des Kunden umfasst.

3. Verfahren nach Anspruch 2, wobei die abgekürzte Darstellung des Werts C des Zählers des Kunden mittels des Chiffriercode K chiffriert wird.

4. Verfahren nach Anspruch 1, wobei der Authentifizierer des Kunden einen Zähler umfasst, der bei jedem Authentifizierungsversuch um eine Einheit fortgeschrieben wird.

5. Verfahren nach Anspruch 1, wobei der Authentifizierungscode CA durch die Beziehung: $CA = A(K_{client}, C||M)$ in dem Fall gegeben ist, in dem der Kunde Daten M signieren will.

6. Verfahren nach Anspruch 1, wobei in dem Zugangsund/oder Zahlungssteuersystem ein Zählerwert C', welcher der letzten geglückten Authentifizierung entspricht, für jeden Kunden beibehalten wird, wobei das System den Authentifizierungs-Geheimcode $K_{client}$ jedes Kunden anhand eines gemeinsamen Haupt-Authentifizierungsschlüssels KA und der Identität des Kunden mit Hilfe eines mit D bezeichneten Algorithmus erstellt, wobei: $K_{client} = D(KA, ID [Kunde])$.

7. Verfahren nach Anspruch 6, wobei ein Authentifizierungsversuch nur dann akzeptiert wird, wenn für einen bestimmten Kunden der Zählerwert C um mindestens eine Einheit über C' liegt, und wenn der ihn begleitende Authentifizierungswert CA gleich dem vom System anhand des Zählerwerts C und des Kunden-Authentifizierungscodes $K_{client}$ neu berechneten Authentifizierungswert ist.

8. Verfahren nach Anspruch 1, wobei die Kunden in Gruppen unterteilt sind und für jede Gruppe ein unterschiedlicher Chiffrierungscode benutzt wird.

9. Verfahren nach Anspruch 8, wobei der Kunde bei jedem Zugriff überträgt:

- die Nummer NG der Gruppe, zu der er gehört, im Klartext,
- seine individuelle Identifizierungsnummer innerhalb der Gruppe, die mit dem Chiffriercode $K_{NG}$ der Gruppe NG chiffriert ist,
- die Authentifizierungsdaten CA sowie einen abgekürzten Wert c des Zählers C.

**10.** Verfahren nach Anspruch 9, wobei der abgekürzte Wert c mit Hilfe des Gruppen-Chiffriercode $K_{NG}$ chiffriert wird.

**11.** Verfahren nach Anspruch 9, wobei die Nummer der Gruppe NG mit Hilfe eines gemeinsamen Chiffriercode K chiffriert wird.

**12.** Verfahren nach Anspruch 11, wobei alle Gruppencode $K_{NG}$ von ein und demselben Hauptcode KE über einen Algorithmus D, wie z.B.: $K_{NG} = D(KE, NG)$, abhängen.

**13.** Verfahren nach Anspruch 9, wobei der Chiffrieralgorithmus der individuellen Identifizierungsnummer NI und der abgekürzten Darstellung c des Zählerwerts mit Hilfe des Codes $K_{NG}$ mit E bezeichnet wird, der Chiffrieralgorithmus der Gruppennummer NG mit Hilfe des Schlüssels K als E' bezeichnet wird, die Verkettung der beiden Ketten A und B mit A||B bezeichnet wird, und die Identifizierungs-Authentifizierungssequenz durch die folgende Kette gegeben ist:

$$E'_{K,CA}(NG)||EK_{NG,CA}(c||NI)||CA.$$

**Claims**

**1.** Process of authentication in a system for access control and/or payment of voice or telematic services offered to a customer by a service provider making it possible to ensure the anonymity of the customer with respect to third parties, **characterized in that**, during each access, in accordance with a monodirectional authentication protocol, the customer emits an authentication sequence varying completely for each transaction and formed from a counter C varying for each transaction and the individual identification number of the customer in NI with the aid of two cryptographic functions, by:

- calculating an authentication code CA requiring the intervention of elements comprising the secret authentication key $K_{customer}$ of the customer and the current value of the counter C;
- encryption calculation involving the intervention of elements comprising an encryption key K shared between customer authenticators and the access control and/or payment system, the individual identification number of the customer NI and the authentication code CA.

**2.** Process according to claim 1, wherein the authentication sequence comprises an abbreviated representation c of the value C of the counter of the customer.

**3.** Process according to claim 2, wherein the abbreviated representation of the value C of the counter of the customer is encrypted with the aid of the encryption key K.

**4.** Process according to claim 1, wherein a counter is used in the customer authenticator, the counter being incremented by one unit during each authentication attempt.

**5.** Process according to claim 1, wherein, if the customer would like to sign data M, the authentication code CA is given by the relation:

$$CA = A (K_{customer}, C||M).$$

**6.** Process according to claim 1, wherein the value of the counter C' corresponding to the last successful authentication is kept in the access control and/or payment system, for each customer, and in that said system rebuilds the secret authentication key $K_{customer}$ for each customer starting from a master authentication key KA common to the entire system and the customer's identity, using an algorithm denoted D, where:

$$K_{customer} = D(KA, ID[customer]).$$

**7.** Process according to claim 6, wherein an authentication attempt is only accepted if the value of the counter C for the customer considered is greater than C' by at least one unit and if the authentication value CA which accompanies it is equal to the authentication value recalculated by the server using C and the key $K_{customer}$.

**8.** Process according to claim 1, wherein customers are distributed into groups and a separate encryption key is used for each group.

**9.** Process according to claim 8, wherein the customer transmits the following during each access:

- the number of the group NG to which he belongs in plain text;
- his individual identification number NI within the group encrypted with the encryption key $K_{NG}$ for the group NG;
- authentication data CA and the short value c of the counter C.

**10.** Process according to claim 9, wherein the short value c is encrypted using the group encryption key $K_{NG}$.

**11.** Process according to claim 9, wherein the group number NG is encrypted using a common encryption key K.

12. Process according to claim 11, wherein all keys in the group $K_{NG}$ depend on the same master key KE through an algorithm D such that:

$$K_{NG} = D (KE, NG).$$

13. Process according to claim 9, wherein the encryption algorithm for the individual identification number NI and the short representation c of the value of the counter using the key $K_{NG}$ is denoted E, the encryption algorithm for the group number NG using the key K is denoted E', the concatenation of the two strings A and B is denoted A||B, and the identification-authentication sequence is then defined by the string:

$$E'_{K,CA}(NG)||E_{KNC,CA} c||NI)||CA.$$

EP 0 948 852 B1

# FIG.1

| CLIENT | | FOURNISSEUR DE SERVICE | | SERVEUR DE FACTURATION |